# EUROPEAN PATENT APPLICATION

(11) **EP 4 686 713 A1**
(43) Date of publication of application: **04.02.2026**
(21) Application number: 24191871.3
(22) Date of filing: 30.07.2024
(51) Int. Cl.: C04B 41/50, C04B 41/00, C04B 41/65, C04B 41/91, C04B 111/82

(54) **STAINING COMPOSITION FOR CONCRETE AND CEMENTITIOUS SUBSTRATES**

(71) Applicant: Sika Technology AG, 6340 Baar (CH)
(72) Inventor: BOVOLD, Peter, Bemidji, 56601 (US); DARASKEVICH, Edward, Aurora, 60506 (US); STOLECKI, Adrian, Aurora, 60506 (US)
(74) Representative: Sika Patent Attorneys

(57) **Abstract**

The invention is directed to a novel staining composition and process for using the said staining composition. The chemically reactive staining composition of the invention uses an environmental friendly oxidizing agent in staining of substrates such as concrete, rock, stone, mortar or cement. The staining composition of this invention produces concrete stains in colors such as black and other very dark hues by using an alternative, environmentally friendly, or less toxic oxidizing agent that remains stable under acidic conditions. The invention further relates to a stained substrate obtained by the staining composition of the invention.

## Description

### Technical field

The present invention relates to the field of stains for coloring concrete, masonry, rock, stone and the like. More specifically, the present invention relates to chemically reactive (or acid etching) staining composition that uses an environmentally friendly oxidizing agent in staining of concrete surfaces.

### Background of the invention

Concrete serves as a versatile building material employed in various applications such as foundations, walls, floors, countertops, fireplaces, swimming pools, patios, exterior walls, and retaining walls, among others. Despite its affordability and strength, one drawback of concrete lies in its lack of aesthetic appeal. To address this, concrete surfaces are often painted, textured, or covered with vegetation, stone, brick, wood, or tile. However, these methods are costly, labor-intensive to maintain, and sometimes ineffective.

Concrete staining is a popular method for enhancing the appearance of concrete surfaces in both residential and commercial settings. Concrete staining enhances the aesthetic appeal of concrete surfaces by adding color and character. In contrast to other techniques, which simply covers the surface, stains permeate the concrete surface and provide a durable and unique look. Concrete staining not only improves the look of concrete based floors, patios, and driveways but also increases their resistance to wear and environmental factors. Concrete surfaces can be stained in a wide variety of colors, from subtle earth tones to vibrant hues, depending on the use of acid-based or water-based stains.

Acid etching in concrete staining is a specialized technique used to create vibrant, multicolored color patterns on concrete surfaces. In this process, an acid-based stain is used, containing water, hydrochloric acid, and metallic salts. The acid-based stain reacts chemically with the minerals found in the concrete. The acid lightly etches the surface, allowing the metallic salts to penetrate and permanently alter the color of the concrete, producing rich, natural tones.

Acid etching stains (or chemically reactive stains) for concrete are a popular choice for creating a variety of colors and effects, including black and very dark hues. The chemical process behind these stains involves the use of oxidizing agents to create the desired color. To achieve black or very dark colors, manganese chloride is commonly used. Manganese chloride (MnCl₂) reacts with an oxidizing agent to form manganese oxide (MnO₂), which is black. The oxidizing agent facilitates the chemical reaction needed to convert manganese chloride to manganese oxide. In prior art, sodium dichromate (Na₂Cr₂O₇) is commonly used as an oxidizing agent for converting manganese chloride to manganese oxide. The reaction occurs in the acidic environment provided by the stain.

2MnCl₂ + Na₂Cr₂O₇ + 2H₂O → 2MnO₂ + 2NaCl + 2HCl

Sodium dichromate (Na₂Cr₂O₇) serves as a powerful oxidizing agent that drives the conversion of manganese chloride to manganese oxide. Its high oxidative potential ensures a complete and effective reaction, producing a consistent and deep black color. While sodium dichromate is effective, its use comes with significant health and safety considerations. Like all hexavalent chromium compounds, sodium dichromate is carcinogenic, posing significant health risks such as lung cancer, skin irritation, and respiratory issues upon prolonged exposure. Due to the health risks associated with hexavalent chromium, its use is highly regulated. There is ongoing research and development to find safer alternatives for creating dark stains on concrete. The industry is increasingly exploring safer alternatives to achieve the desired aesthetic effects without compromising health and safety.

One of the alternatives to overcome these problems is using pigmented stains (i.e. NonReactive Stains). These stains use pigments rather than chemical reactions to achieve color. While they may not have the same penetrating qualities as acid stains, they offer a safer alternative for achieving dark colors.

Another alternative approach involves use of advanced technologies such as Nano-based Stains. Nanotechnology-based stains are being developed to provide deep, lasting color with fewer health and environmental risks.

Another approach could involve using environmentally friendly or less toxic chemicals. However, finding an oxidizing agent that remains stable under acidic conditions is challenging. This stability issue precludes the use of common oxidizers like bleach and hydrogen peroxide. Further, oxidizing acids are also not very suitable owing to their inherent dangers and potential side reactions. For example, perchloric acid could be effective but is so reactive that it destroys the containers, in addition to being extremely hazardous. Though nitric acid could be effective, but it generates nitrogen oxides and is therefore more dangerous than hydrochloric acid.

Until now, there has not been a comparable product to sodium dichromate for acid etching concrete and mortar that is also environmentally safe. In the context of acid etching stains, especially for dark colors, it is highly desirable to identify alternative oxidizing agents that can achieve similar or superior staining results without the associated health and/or environmental risks.

In light of the current state of the art, it is desirable to manufacture a concrete staining composition using an alternative oxidizing agent, which addresses many of the shortcomings of sodium dichromate based concrete staining compositions.

Disclosed herein are environmentally safe concrete or mortar staining/etching compositions and methods thereof.

### Summary of the invention

The object of the present invention is to provide an environmental friendly dark colored staining composition for concrete. In particular, the present invention employs persulfate based oxidizing agent instead of Sodium dichromate (Na₂Cr₂O₇) to produce dark colored concrete stains.

The subject of the present invention is a composition as defined in claim 1.

It was surprisingly found out that the disadvantages related to the prior art solutions can be solved or at least partially mitigated by using the novel staining composition of the present invention. The claimed composition of the present invention allows dark colored staining of concrete using environmental friendly raw materials/components.

Other aspects of the present invention are presented in other independent claims. Preferred embodiments of the invention are presented in the dependent claims.

### Brief description of the Drawing

Fig. 1 illustrates photographic images of the stained concrete samples prepared using staining compositions containing varying amounts of MnCl₂ flakes
Fig. 2 illustrates photographic images of the stained concrete samples prepared using staining compositions containing varying amounts of oxidizing agent (or oxidizer)
Fig. 3 illustrates photographic images of the stained concrete samples prepared using staining compositions containing varying amounts of acid
Fig. 4 illustrates photographic images of the stained concrete sample prepared using staining composition as per a representative embodiment of the present invention

### Detailed description of the invention

The subject of the present invention is a staining composition comprising:
a) at least one persulfate;
b) at least one acid;
c) at least one metal ion; and
d) water.

### Definitions

The recitation of a numerical range using endpoints includes all numbers subsumed within that range (e.g., 1 to 5 includes 1, 1.5, 2, 2.75, 3, 3.80, 4, 5, etc.).

The terms "a," "an," "the," "at least one," and "one or more" are used interchangeably. Thus, for example, a coating composition that contains "an" additive means that the coating composition includes "one or more" additives.

The term "cementitious" refers to a substrate or material that comprises cement and has the properties or characteristics of cement, or that comprises a chemical precipitate, preferably of carbonates, having the characteristics of cement. Examples of cementitious substrates and materials include cement, burnished cement, concrete, polished concrete and cement fiberboard, and examples of places or applications where cementitious substrates may be employed include floors (e.g., garage floors), tiles (e.g., floor tiles), decks, boards and panels (e.g., fiber cement boards), and the like.

The term "comprises" and variations thereof does not have a limiting meaning where such term appears in the description or claims. For instance, a composition comprising an ethylenically unsaturated compound means that the composition includes one or more ethylenically unsaturated compounds.

The term "Concrete" is used to designate a mixture of hydraulic cement, aggregate and water, which sets to form a hardened mass. Concrete may contain either mineral or non-mineral aggregate, including naturally occurring materials, for instance, sand and gravel or quarried rock, or manufactured aggregate, such as expanded shale, clay or the like.

The terms "preferred" and "preferably" refer to embodiments which may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

The term "stain" in the context of the present invention refers to an acid stain or chemically reactive stain. Acid stain is not a paint or a coating agent but is rather solution that causes a chemical reaction on a cementitious material. Acid stains can be applied to any concrete, polymer overlay, or self-leveling products that have a cementitious base, such as cement-based interior or exterior floors, countertops, and walls. The stain solutions are made with water, acid and inorganic salts and react with minerals present in the concrete, resulting in coloring of the concrete.

Unless defined otherwise, all technical and scientific terms used herein have the same meaning as commonly understood by those of ordinary skill in the art.

As set forth above, there has not been a comparable but environmentally safe alternative to sodium dichromate for staining/etching concrete and mortar until now. Disclosed herein are environmentally safe concrete or mortar staining compositions and methods thereof.

The claimed composition of the present invention has proven particularly effective for staining concrete surfaces, those skilled in the art can appreciate that the inventive composition can be used in a variety of different applications and in a variety of different areas of manufacture to yield stained surfaces. Representative examples include commercial restaurant dining areas, interior and exterior flooring, stamped concrete, stamped or textured cementitious overlays, concrete countertops, vertical concrete applications, concrete building exteriors, statuary, hotel and lobby areas, and any other concrete surfaces seeking an aged or antiqued look, whether on new or existing concrete.

Not all concrete surfaces are suitable for acid staining. For instance, a smooth concrete surface typically produces more appealing results compared to an old, worn surface. If the concrete is contaminated, has exposed aggregate, or has been previously acid etched, the stain may not absorb properly and the final appearance may not meet expectations. The aggregate material in the cement does not react with the stain, only materials in the concrete paste do. In other applications, and in particular where the surface is textured, as in stamped concrete or stamped overlays, acid staining provides depth of color, larger selection of styles, and a realistic look to the surface.

The claimed compositions may be applied to a variety of substrates, especially cementitious substrates, including concrete, cement, cement tiles, and fiber cement substrates. The compositions are particularly useful for staining cementitious substrates including concrete, cement floors and fiber cement articles.

### Persulfate

Persulfate oxidizing agents are versatile compounds widely used in various industrial and commercial applications due to their strong oxidative properties. Persulfates are highly effective in initiating polymerization reactions, making them essential in the production of plastics and synthetic fibers. They are also used in soil and groundwater remediation processes to degrade organic contaminants, and in the electronics industry for etching and cleaning printed circuit boards. Additionally, persulfates serve as bleaching agents in the paper and textile industries and as disinfectants in water treatment. Their high oxidative potential enables them to break down complex molecules, ensuring efficient and thorough chemical processes. However, their application in concrete stains or acid etching of concrete has not been documented.

Persulfate oxidizing agents include both monopersulfates, like potassium monopersulfate (KHSOs), and dipersulfates, such as sodium persulfate (Na₂S₂O₈) and potassium persulfate (K₂S₂O₈).

The claimed staining composition of the present invention comprises at least one persulfate. The persulfate oxidizes the metal ions and facilitate generation of colored stain in concrete and/or cementitious substrate.

Preferably, the persulfate is a monopersulfate or a dipersulfate, preferably dipersulfate, more preferably selected from the group consisting of sodium persulfate (Na₂S₂O₈), potassium persulfate (K₂S₂O₈) and ammonium persulfate, most preferably sodium persulfate.

The most preferred dipersulfate is sodium persulfate as it has the greatest solubility in water and is least expensive. Moreover, it generates sodium and sulfate upon reduction, both of which are relatively benign from environmental and health perspectives. Potassium persulfate and ammonium persulfate are examples of other persulfates which may be used. Potassium persulfate, however, is an order of magnitude less soluble in water than sodium persulfate; and ammonium persulfate is even less desirable as it may decompose into constituents such as ammonium ion which are potential health concerns.

Preferably, the persulfate is present in 1-25%, more preferably 1-15%, and most preferably 2-10% by weight, based on the total weight of the composition.

### Acid

The claimed staining composition of the present invention comprises at least one acid, The acid is preferably an organic acid, especially a carboxylic acid, and/or a mineral acid, especially hydrochloric acid. More preferably, the acid is selected from the group consisting of citric acid and hydrochloric acid.

Acids useful in the present invention can include organic acids, preferably carboxylic acids such as acetic, maleic, citric, formic, and benzoic; phosphoric; phosphonic such as ethyl phosphonic acid; poly phosphoric acids such as pyrophosphoric; and hexameta phosphoric; sulphuric; sulfonic such as benzyl sulfonic acid; nitric or nitrous acid; hydrogen halides such as hydrogen fluoride, hydrogen chloride, hydrogen bromide, and hydrogen iodide. Preferred are phosphoric and polyphosphoric acids, nitric or nitrous acid, and hydrogen chloride. More preferred are phosphoric, pyrophosphoric and hydrogen chloride. Most preferred is citric acid and/or hydrogen chloride.

Preferred staining compositions include a sufficient amount of acid such that the pH of the resultant composition is less than about 5, preferably less than about 4, more preferably less than about 2, and most preferably less than about 1. In such compositions, the pH preferably is greater than about -2, more preferably greater than about -1.

Preferably, the claimed staining composition comprises at least an acid, wherein the acid is preferably an organic/carboxylic acid and/or mineral acid, more preferably citric acid and/or hydrochloric acid.

Preferably, the claimed staining composition comprises at least an acid, wherein the acid is present in 0.25-20%, more preferably 2-15% and most preferably 8-15% by weight, based on the total weight of the composition.

Preferably, the staining composition has a pH below 5, preferably below 2.
%

The pH of the staining composition, which remains stable during and after use, contributes to the environmental friendliness of the staining composition.

### Metal Ion

The claimed staining composition of the present invention comprises at least one metal ion. Metal ions are typically introduced as water soluble or acid soluble metal salts. Metal salts useful in the various compositions of the invention can include chloride, sulfate, nitrate, nitrate, phosphate, or phosphonate salts of titanium, vanadium, chromium, manganese, iron, cobalt, nickel, copper, aluminium, magnesium, or barium. Specific examples of suitable metal salts include but are not limited to VCl₃, Cr(CH₃CO₂)₃, Cr(CH₃ CO₂)₂, CrCl₃, CrCl₂, Cr₂(SO₄)₃, Cr(SO₄), Cr(NO₃)₃, CrPO₄, MnCl₂, Mn₂(PO₄)₃, MnSO₄, Mn(NO₃)₂, MnCOs, FeCl₂, FeCl₃, FeSO₄, Fe₂(SO₄)₃, FePO₄, Fe(H₂NSO₃)₂, Fe(NO₃)₃, Fe(C₂O₄), CoCl₂, CoCl₃, CoSO₄, Co(NO₃)₂, CuCl, CBrI₂, CuCl₂, Cu(CH₃CO₂)₂, Cu(HCO₂)₂, Cu(C₂O₄),CuCO₃, CuSO₄, Cu(NOs)z, NiCl₂, and NiCl₃. Preferred metal salts include salts of Fe, Cr, V, Ni, Mn, Cu, and Co.

Preferably the staining composition comprises at least one metal ion, wherein the metal ion is preferably a metal salt selected from the group consisting of FeCl₃, CoCl₃, VCl₃, NiCl₃, MnCl₂, CrCI₃ and CuCl_{2;} more preferably FeCl₃, MnCl₂ and CuCl₂ and most preferably MnCl₂.

The unit of measurement for the metal salt is weight percent of metal ions based on total composition weight. For example, if 10 grams of anhydrous ferrous chloride (FeCl₂) is added to 90 grams of water then the resulting composition contains 4.41% of iron (Fe(II)) ion. Suitable compositions can include more than one type of metal ion such as for example iron and copper ions.

Preferred compositions include at least 0.1%, more preferably at least 0.2%, and most preferably at least 0.5% by weight of total metal ion based on total composition weight.

Preferred compositions include less than 25%, more preferably less than 20%, and most preferably less than 15% by weight of total metal ion based on total composition weight.

Preferably the staining composition comprises at least one metal ion, wherein the metal ion is in the form of a metal salt which is present in 0.1-25%, more preferably 7-25% and most preferably 7-20% by weight, based on the total weight of the composition.

Preferably, ratio of the weight of metal ion in the form of a metal salt and weight of the persulfate is between 2:1 to 5:1, more preferably 2:1 to 3:1.

The disclosed staining compositions may include a surface-active agent (surfactant) that modifies the interaction of the staining composition with the substrate or with a prior applied coating. The surface-active agent affects qualities of the composition including how the composition is handled, how it spreads across the surface of the substrate, and how it bonds to the substrate. In particular, the agent can modify the ability of the composition to wet a substrate. Surface-active agents may also provide leveling, defoaming or flow control properties, and the like. If used, the surface-active agent is preferably present in an amount of less than 5 weight %, based on the total coating composition weight.

Exemplary surface-active agents include those available under the trade designations STRODEX^{™} KK-95H, STRODEX PLF100, STRODEX PK0VOC, STRODEX LFK70, STRODEX SEK50D and DEXTROL^{™} OC50 from Dexter Chemical L.L.C. of Bronx, NY; HYDROPALAT^{™} 100, HYDROPALAT 140, HYDROPALAT 44, HYDROPALAT 5040 and HYDROPALAT 3204 from Cognis Corp. of Cincinnati, OH; LIPOLIN^{™} A, DISPERS^{™} 660C, DISPERS 715W and DISPERS 750W from Degussa Corp. of Parsippany, NJ; BYK^{™} 156, BYK 2001 and ANTI-TERRA^{™} 207 from Byk Chemie of Wallingford, CT; DISPEX^{™} A40, DISPEX N40, DISPEX R50, DISPEX G40, DISPEX GA40, EFKA^{™} 1500, EFKA 1501, EFKA 1502, EFKA 1503, EFKA 3034, EFKA 3522, EFKA 3580, EFKA 3772, EFKA 4500, EFKA 4510, EFKA 4520, EFKA 4530, EFKA 4540, EFKA 4550, EFKA 4560, EFKA 4570, EFKA 6220, EFKA 6225, EFKA 6230 and EFKA 6525 from Ciba Specialty Chemicals of Tarrytown, NY; SURFYNOL^{™} CT-111, SURFYNOL CT-121, SURFYNOL CT-131, SURFYNOL CT-211, SURFYNOL CT 231, SURFYNOL CT-136, SURFYNOL CT-151, SURFYNOL CT-171, SURFYNOL CT-234, CARBOWET^{™} DC-01, SURFYNOL 104, SURFYNOL PSA-336, SURFYNOL 420, SURFYNOL 440, ENVIROGEM^{™} AD-01 and ENVIROGEM AE01 from Air Products & Chemicals, Inc. of Allentown, PA; TAMOL^{™} 1124, TAMOL 850, TAMOL 681, TAMOL 731 and TAMOL SG-1 from Rohm and Haas Co. of Philadelphia, PA; IGEPAL^{™} CO-210, IGEPAL CO-430, IGEPAL CO-630, IGEPAL CO-730, and IGEPAL CO-890 from Rhodia Inc. of Cranbury, NJ; T-DET^{™} and T-MULZ^{™} products from Harcros Chemicals Inc. of Kansas City, KS; polydimethylsiloxane surface-active agents (such as those available under the trade designations SILWET^{™} L-760 and SILWET L-7622 from OSI Specialties, South Charleston, WV, or BYK 306 from Byk Chemie) and fluorinated surface-active agents (such as that commercially available as FLUORAD^{™} FC-430 from 3M Co., St. Paul, MN). The surface-active agent may be a defoamer. Exemplary defoamers include BYK 018, BYK 019, BYK 020, BYK 022, BYK 025, BYK 032, BYK 033, BYK 034, BYK 038, BYK 040, BYK 051, BYK 060, BYK 070, BYK 077 and BYK 500 from Byk Chemie; SURFYNOL DF-695, SURFYNOL DF-75, SURFYNOL DF-62, SURFYNOL DF-40 and SURFYNOL DF-110D from Air Products & Chemicals, Inc.; DEEFO^{™} 3010A, DEEFO 2020E/50, DEEFO 215, DEEFO 806-102 and AGITAN^{™} 31BP from Munzing Chemie GmbH of Heilbronn, Germany; EFKA 2526, EFKA 2527 and EFKA 2550 from Ciba Specialty Chemicals; FOAMAX^{™} 8050, FOAMAX 1488, FOAMAX 7447, FOAMAX 800, FOAMAX 1495 and FOAMAX 810 from Degussa Corp.; FOAMASTER^{™} 714, FOAMASTER A410, FOAMASTER 111, FOAMASTER 333, FOAMASTER 306, FOAMASTER SA-3, FOAMASTER AP, DEHYDRAN^{™} 1620, DEHYDRAN 1923 and DEHYDRAN 671 from Cognis Corp.

Preferably, the staining composition further comprises at least one solvent and/or at least one surfactant.

Preferably, the staining composition include at least about 0.01 weight percentage, preferably 0.5 weight percentage, more preferably 2 weight percentage, or most preferably 5 weight percentage, or an intervening concentration thereof of one or more surfactants.

The concentration of the surfactant is adjusted in accordance with at least the molecular weight and the function of each species of the one or more surfactants in the aqueous solution forming the staining composition.

The claimed staining composition of the present invention may optionally include one or more solvent. Suitable solvents are chosen based on their ability to effectively dissolve and transport the reactive chemicals within the staining composition to achieve the desired effect on concrete substrates. Some of the representative examples of the suitable solvent which can be utilized in the context of the present invention includes, but are not limited to, isopropyl alcohol, ketones, alkanes, chloroform, alcohols, tetrahydrofuran (THF), ethyl acetate class, Methyl Acetates, water, dioxane, ethers, toluene, oil ethers and mixtures thereof.

### Powder form

In a preferred embodiment, the claimed staining composition of the present invention is sold in a ready to use formulation for purchase and immediate use by the consumer. In a further, preferred embodiment the staining composition can be sold in a concentrated formulation for purchase and dilution for use by consumers. In most preferred embodiment, the claimed staining composition is sold in a concentrated formulation in a powder form for purchase and diluted at the application site for use by consumers.

Examples of various components in the staining compositions, including a) persulfate, b) acid, and c) metal ion, along with their respective weight percentages, are provided above.

Preferably, the components a), b) and/or c) are in powder form, and provided in a single container, preferably a sealed container.

In a preferred embodiment the components a), b) and/or c) of the claimed staining composition are mixed with water at the site of application of chemically reactive stain.

The weight ratios between the different components plays critical role in achieving the desired color and shade on the surface of the concrete. Multiple layers may be applied to achieve the desired depth and intensity of color, with each layer being allowed to dry or partially dry before the subsequent layer is applied to ensure proper penetration.

The stain can be applied by either spray or brush on the concrete or masonry. Preferably, the stained composition of the present invention is applied to concrete surface by spraying.

The observed results will vary slightly depending on the chemical make-up of the water used; for example, distilled or filtered water is best. It is important that, when diluting the mixture, proper water quality be maintained. Distilled or filtered water is recommended in the best mode. Job site water with unknown impurities can appreciably alter the expected coloration and hue or intensity.

### Staining method

In another aspect, the present invention relates to
a process for staining a substrate comprising concrete, rock, stone, mortar or cement, wherein the process comprises the steps of:
i) mixing the components of the staining composition with water;
ii) applying one or more layers of the staining composition to the substrate; and
iii) after permeation of the staining composition, allowing the color alteration in the substrate, to obtain the stained substrate.

In step (i) the components of the staining compositions are mixed with water. This results in a staining composition for application on the surface of substrate comprising concrete rock, stone, mortar or cement.

In a preferred embodiment, in order to apply the staining composition of the present invention, the concrete surface should be clean and free from dirt, grease, paint, water repellants such as sealers, and curing agents.

The presence of such foreign agents may prevent the stain from penetrating and reacting. In a further preferred embodiment, the substrate is cleaned using a cleaner. An example of a suitable cleaner for concrete surfaces that allows proper preparation prior to acid staining is trisodium phosphate-containing cleaners. In a further preferred embodiment, the substrate is chipped or scarred before staining so as to create an "aged" appearance.

In step (ii) one or more layers of the staining composition is applied to the substrate.

In a preferred embodiment, the staining composition is applied on a substrate using an application method selected from spraying, brushing or rolling. Preferably, the stained composition of the present invention is applied to concrete surface by spraying. For best results a heavy layer of stain needs to be applied to the surface. The method of application will affect the final outcome. For instance, spraying the stain will give a more natural appearance, while brushing it on and smoothing it out will result in a more uniform finish.

After application on the substrate, the staining composition is allowed to permeate into the substrate. The staining composition is allowed to penetrate on the substrate for the prescribed amount of time, so that the cross-linking of the staining composition and concrete material occur. The prescribed amount of time can include at least about 1 minute, 5 minutes, 10 minutes, 30 minutes, or 60 minutes, or an intervening amount of time thereof. The prescribed amount of time can include no more than about 60 minutes, 30 minutes, 10 minutes, 5 minutes, or 1 minute, or an intervening amount of time thereof. Preferably, the prescribed amount of time can include at least about 1 minute and no more than about 60 minutes.

In step (iii) after permeation of the staining composition, the color alteration is allowed in the substrate, to obtain the stained substrate.

Once the staining composition permeates the substrate it is allowed to alter the color of the substrate. The ion exchange reaction produces an inorganic chromogenic substance to form a stable colored substrate of concrete.

In a preferred embodiment, after applying the staining composition on the substrate and allowing it to dry, surface of the substrate is washed. Washing the surface of the substrates includes washing with water to remove the staining composition and any laitance from the surface of the substrate. The surface of the substrate can be pressure washed with water at a pressure of about 2,000 psi or more without adverse effect.

In a preferred embodiment, after applying the staining composition on the substrate and allowing it to dry, the acid present in the staining composition must be neutralized. In a preferred embodiment, the neutralization is done by using a basic powder like baking soda or a solution of ammonia. The baking soda or ammonia is applied to the surface of the substrate and brushed over it to ensure contact with any remaining acid. Then, the neutralizing agent is removed by rinsing with water.

In a preferred embodiment, the surface of the substrate is sealed and/or waxed afterward to protect the stain and enhance its shine and depth, especially when the substrate is a floor.

In yet another aspect, the present invention relates to a stained substrate obtained by the claimed process of the invention.

The staining compositions and process described in the present invention offer numerous advantages. They have no negative environmental impact and do not harm marine or terrestrial life. The runoff does not need to be collected and disposed of at hazardous waste sites; instead, it is safe for surface drains, groundwater, oceans, lakes, rivers, estuaries, bays, and streams.

### Examples

Set out below are a number of examples which further illustrate the invention but are in no way intended to restrict the scope of the invention. Unless indicated otherwise, all proportions and percentages are by weight. The examples are merely illustrative and not intended to be construed as limiting application of the present invention.

### Raw Materials Used

The following listed raw materials are utilised to obtain the staining composition of the present invention.

| | |
|---|---|
| Anhydrous powder FeCl₃ | Sigma Aldrich |
| Manganese(II) chloride Flake | Sigma Aldrich |
| Sodium persulfate | free-flowing, Redi-Dri^{™} from Sigma Aldrich |
| CuCl₂ anhydrous, powder | Sigma Aldrich |
| Baking soda | Sigma Aldrich |

All the above chemicals are in solid/pure form. The powdered chemicals are diluted with HCl* (i.e. 38 % HCl diluted in water). The wt.-% in the tables refer to the diluted HCl.

### Process for preparing staining composition:

To prepare an acid etch concrete stain using powdered components, muriatic acid (hydrochloric acid) is mixed/diluted with water in a plastic container. In a separate container, the powdered components are mixed. These powdered components will react with the concrete to produce a black or dark hue color. Slowly add the mixed powder components to the acid solution while stirring continuously to ensure thorough dissolution and avoid clumping. Once fully mixed, allow the solution to sit for 15-20 minutes to ensure all chemical reactions have stabilized. Before applying, thoroughly clean the concrete surface to remove any debris or oils, then apply the acid stain evenly using a brush, roller, or sprayer. Allow the stain to react with the concrete for at least 4-6 hours, then neutralize the surface with a mixture of baking soda and water before rinsing thoroughly with clean water. This process will yield a unique, color pattern on the concrete surface.

**Table 1: Composition details of the representative staining composition prepared with varying concentration of different Components.**

| **S. No** | **Water** | **FeCl3** | **HCI*** | **MnCl2 Flake** | **Oxidizer (Sodium persulfat e)** | **Stability (Bad 0 - 5 Excellent )** | **Color After Mixing (Bad 0 - 5 Excellent )** | **Description** |
|---|---|---|---|---|---|---|---|---|
| 1 | 15.00 g | 2.00 g | 2.00 g | 2.00 g | 2.00 g | 0 | 4 | Normal |
| 2 | 2.00 g | 2.00 g | 15.00 g | 1.00 g | 1.00 g | 4 | 4 | Excess Acid |
| 3 | 15.00 g | 2.00 g | 2.00 g | 500 g | 1.00 g | 3.5 | 4 | Excess Flake |
| 4 | 15.00 g | 2.00 g | 2.00 g | 1.00 g | 500 g | 0 | 4 | Excess Ox |
| 5 | 15.00 g | 2.00 g | 2.00 g | 500 g | 500 g | 2 | 4 | Excess Ox and flake |
| 6 | 2.00 g | 200 g | 15.00 g | 500 g | 500 g | 4 | 4 | Excess Ox, flake and acid |

Table 1 outlines the representative staining compositions prepared using the process described above. It depicts details of the various components used to prepare the staining compositions, along with the specific amounts of each component.

Table 1 summarizes the details of the representative staining composition or formulations prepared in the initial experiments performed. The staining compositions prepared initially, as summarized in Table 1, involves a reaction involving an oxidizer (Sodium persulfate), a metal ion (MnCl₂), and an acid (hydrochloric acid).

It is utmost important that the staining composition or formulation should be stable and impart dark color. In order to achieve desired stain, the amount of different components within the staining composition need to be optimized. The initial experiments, as summarized in Table 1, are directed towards optimizing a suitable staining formulation.

It has been observed that staining formulation 1 & 4 are not stable at as they suffer from high degree of precipitation. In case of staining formulation 2, the staining solution lightened up over time. In case of staining formulation 5 & 6 the oxidizer does not fully get dissolved.

The outcome of the initial experiments revealed that staining formulation 3 is the most suitable, as it showcases very light precipitation and decent coloration. Thus, staining formulation 3 was chosen as a starting point and each ingredient level was evaluated in further experiments.

**Table 2: Details of the staining compositions prepared with varying concentrations of MnCl₂ Flakes to stain Concrete Substrates**

| **S. No.** | **Water** | **FeCl₃** | **HCl*** | **MnCl₂ Flake** | **Oxidizer** | **CuCl₂** |
|---|---|---|---|---|---|---|
| 7 | 15.00 g | 2.00 g | 2.00 g | 0.50 g | 0.50 g | 1.00 g |
| 8 | 15.00 g | 2.00 g | 2.00 g | 1.00 g | 0.50 g | 1.00 g |
| 9 | 15.00 g | 2.00 g | 2.00 g | 1.50 q | 0.50 g | 1.00 g |
| 10 | 15.00 g | 2.00 g | 2.00 g | 2.00 g | 0.50 g | 1.00 g |
| 11 | 15.00 g | 2.00 g | 2.00 g | 3.00 g | 0.50 g | 1.00 g |
| 12 | 15.00 g | 2.00 g | 2.00 g | 4.00 g | 0.50 g | 1.00 g |
| 13 | 15.00 g | 2.00 g | 2.00 g | 500 g | 0.50 g | 1.00 g |

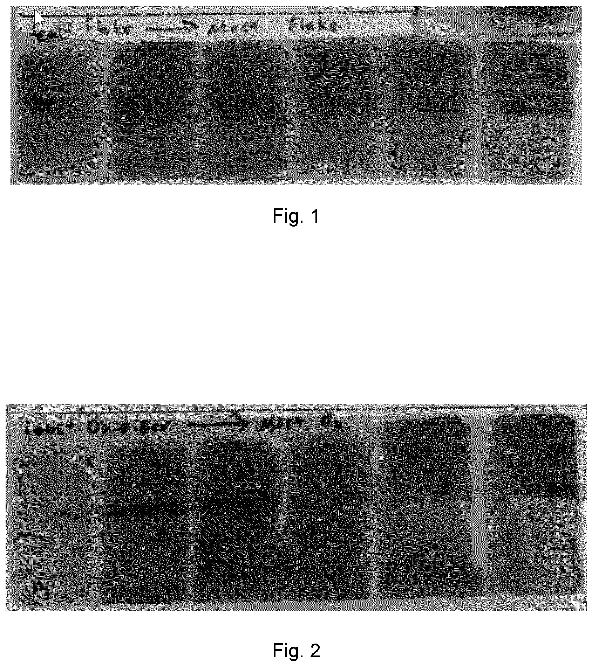

Table 2 outlines representative staining compositions prepared to study the effect of varying concentrations of MnCl₂ flakes. The results of the staining effect induced by the staining compositions outlined in Table 2 are showcased in Figure 1.

It was observed that the best staining effect or color is achieved when the ratio of MnCl₂ flake and the oxidizer was around 2:1 to 3:1. Increasing the amount of MnCl₂ flakes in the staining composition beyond the above described range did not result in any further darkening or enhancement of the color.

**Table 3: Details of the etching compositions prepared with varying concentrations of Oxidizer to stain Concrete Substrates**

| **S. No.** | **Water** | **FeCl₃** | **HCl*** | **MnCl₂ Flake** | **Oxidizer** | **CuCl₂** |
|---|---|---|---|---|---|---|
| 14 | 15.00 g | 2.00 g | 2.00 g | 0.50 g | 0.00 g | 1.00 g |
| 15 | 15.00 g | 2.00 g | 2.00 g | 0.50 g | 1.00 g | 1.00 g |
| 16 | 15.00 g | 2.00 g | 2.00 g | 0.50 g | 2.00 g | 1.00 g |
| 17 | 15.00 g | 2.00 g | 2.00 g | 0.50 g | 300 g | 1.00 g |
| 18 | 15.00 g | 2.00 g | 2.00 g | 0.50 g | 4.00 g | 1.00 g |
| 19 | 15.00 g | 2.00 g | 2.00 g | 0.50 g | 500 g | 1.00 g |

Table 3 outlines representative staining compositions prepared to study the effect of varying concentrations of oxidizing agent (or oxidizer). The results of the staining effect induced by the staining compositions outlined in Table 3 are showcased in Figure 2.

Again, it was observed that the best staining effect or darkest color is achieved when the ratio of MnCl₂ flake and the oxidizer was around 2:1 to 3:1. Further, it is apparent that adding oxidizer had a clear effect on the color, with all values above 0.0 g being significantly darker.

**Table 4: Details of the staining compositions prepared with varying concentrations of acid to stain Concrete Substrates**

| **S. No.** | **Water** | **FeCl3** | **HCl*** | **MnCl₂ Flake** | **Oxidizer** | **CuCl₂** |
|---|---|---|---|---|---|---|
| 20 | 14.00 g | 2.00 g | 3.00 g | 1.00 g | 1.00 g | 1.00 g |
| 21 | 13.00 g | 2.00 g | 4.00 g | 1.00 g | 1.00 g | 1.00 g |
| 22 | 12.00 g | 2.00 g | 500 g | 1.00 g | 1.00 g | 1.00 g |
| 23 | 2.00 g | 2.00 g | 12.00 g | 3.00 g | 5.00 g | 1.00 g |

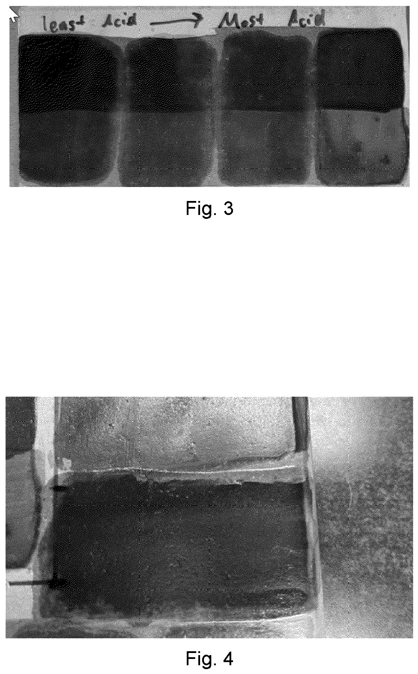

Table 4 outlines representative staining compositions prepared to study the effect of varying concentrations of the acid. The results of the staining effect induced by the staining compositions outlined in Table 4 are showcased in Figure 3.

It was observed that the varying the acid level did not affect the color drastically. However, acid is critical to keep the stain wet, stable and prevent precipitation. The level of acid is decided on the basis of the stability of the staining composition. The color achieved using staining compositions of varying concentration is fairly consistent, but increasing the amount of acid help to prevent precipitation.

**Table 5: Details of the etching compositions prepared with varying concentrations of Copper Chloride to stain Concrete Substrates**

| **S. No.** | **Water** | **FeCl3** | **HCl*** | **Flake** | **Oxidizer** | **Copper** |
|---|---|---|---|---|---|---|
| 24 | 13.00 g | 2.00 g | 500 g | 2.00 g | 2.00 g | 0.50 g |
| 25 | 13.00 g | 2.00 g | 500 g | 2.00 g | 2.00 g) | 1.00 g |
| 26 | 13.00 g | 2.00 g | 500 g | 2.00 g | 2.00 g) | 1.50 g |
| 27 | 13.00 g | 2.00 g | 500 g | 2.00 g) | 2.00 g | 2.00 g |
| 28 | 13.00 g | 2.00 g | 5.00 g | 2.00 g | 2.00 g | 5.00 g |

Table 5 outlines representative staining compositions prepared to study the effect of varying concentrations of copper chloride.

It was observed that the varying the amount of copper chloride in the staining composition did not affect the color at all. Further, to determine the effect of copper chloride in staining composition, some representative staining compositions were prepared without using copper chloride as well. But, all such staining compositions (i.e. without CuCl₂) achieved similar dark colors. Thus, amount of copper chloride did not seem to change anything in the stained surface.

**Table 6: Representative formulation of the staining composition (in grams)**

| **Water** | **FeCl3** | **HCl*** | **Flake** | **Oxidizer** | **Copper** |
|---|---|---|---|---|---|
| 14.0 g | 2.0 g | 3.0 g | 2.0 g | 1.0 g | 0.5 g |

Table 6 depicts details of a representative staining composition with a preferred amount (or weight ratio) of different components. The result of the staining effect induced by the optimized staining composition outlined in Table 6 is showcased in Figure 4.

## Claims

1. A staining composition comprising:
a) at least one persulfate;
b) at least one acid;
c) at least one metal ion; and
d) water.

2. The staining composition as claimed in claim 1, wherein the persulfate is a monopersulfate or a dipersulfate, preferably dipersulfate, more preferably selected from the group consisting of sodium persulfate (Na₂S₂O₈), potassium persulfate (K₂S₂O₈) and ammonium persulfate, most preferably sodium persulfate.

3. The staining composition as claimed in any of the proceeding claims, wherein the acid is preferably an organic acid, especially a carboxylic acid, and/or a mineral acid, especially hydrochloric acid, more preferably the acid is selected from the group consisting of citric acid and hydrochloric acid.

4. The staining composition as claimed in any of the proceeding claims, wherein the metal ion is preferably a metal salt selected from the group consisting of FeCl₃, CoCl₃, VCl₃, NiCl₃, MnCl₂, CrCl₃ and CuCl_{2;} more preferably FeCl₃, MnCl₂ and CuCl₂ and most preferably MnClz.

5. The staining composition as claimed in any of the proceeding claims, wherein the staining composition further comprises at least one solvent and/or at least one surfactant.

6. The staining composition as claimed in any of the proceeding claims, wherein the staining composition has a pH below 5, preferably below 2.

7. The staining composition as claimed in any of the preceding claims, wherein the components a), b) and/or c) are in powder form, and provided in a single container, preferably a sealed container.

8. The staining composition as claimed in any of the proceeding claims, wherein the persulfate is present in 1-25%, more preferably 1-15%, and most preferably 2-10% by weight, based on the total weight of the composition.

9. The staining composition as claimed in any of the proceeding claims, wherein the acid is present in 0.25-20%, more preferably 2-15% and most preferably 8-15% by weight, based on the total weight of the composition.

10. The staining composition as claimed in any of the proceeding claims, wherein the metal ion is in the form of a metal salt which is present in 0.1-25%, more preferably 7-25% and most preferably 7-20% by weight, based on the total weight of the composition.

11. The staining composition as claimed in any of the proceeding claims, wherein the ratio of the weight of metal ion in the form of a metal salt and weight of the persulfate is between 2:1 to 5:1, more preferably 2:1 to 3:1.

12. A process for staining a substrate comprising concrete, rock, stone, mortar or cement, wherein the process comprises the steps of:
i) mixing the components of the staining composition as claimed in any of claim 1 - 11, preferably claim 7, with water;
ii) applying one or more layers of the staining composition to the substrate; and
iii) after permeation of the staining composition, allowing the color alteration in the substrate, to obtain the stained substrate.

13. A stained substrate obtained by the process as claimed in claim 12.
